# EUROPÄISCHE PATENTANMELDUNG

(11) **EP 3 741 517 A1**
(43) Veröffentlichungstag der Anmeldung: **25.11.2020**
(21) Anmeldenummer: 20172374.9
(22) Anmeldetag: 30.04.2020
(51) Int. Cl.: B25J 9/16, B25J 15/00, B25J 15/06, B25J 9/00, B65B 35/38, B65G 47/91

(54) **VERFAHREN ZUM UMSETZEN VON PRODUKTEN SOWIE HIERFÜR GEEIGNETER UMSETZ-ROBOTER**

(30) Priorität: 20.05.2019 DE 102019113287
(71) Anmelder: Gerhard Schubert GmbH, 74564 Crailsheim (DE)
(72) Erfinder: Schubert, Ralf, 74564 Crailsheim (DE)
(74) Vertreter: Weickmann & Weickmann PartmbB

(57) **Zusammenfassung**

Um das Umsetzen bei begrenztem konstruktiven Mehraufwand zu beschleunigen, umfasst der Greifkopf (20) mehrere, vorzugsweise genau zwei, Greifer/Sauger (22) und es wird nur eine steuerbare Achse/Parameter des Roboters (1) dafür verwendet, um deren Relativ-Position zueinander zu verändern.

Bei nur zwei Saugern (22) am Greifkopf (20) ist dies unproblematisch, bei mehr als zwei Saugern wird das Aufnehmen und gegebenenfalls auch das Ablegen jeweils in mehreren Schritten durchgeführt, wobei immer alle Sauger (22) auf einen Sauger-Abstand (SA) entsprechend einem vorgegebenen Produkt-Abstand der Aufnahme- oder Ablage-Positionen gebracht werden, aber in einem Schritt nur ein Teil der Sauger (22) des Greifkopfes (20) mit einem Produkt (P) geladen wird.

## Beschreibung

### I. Anwendungsgebiet

Die Erfindung betrifft ein Verfahren zum schnellen Aufnehmen und insbesondere auch Ablegen, also insgesamt Umsetzen, von Produkten sowie einen hierfür geeigneten Umsetz-Roboter, und insbesondere dessen Greifer.

### II. Technischer Hintergrund

In der Industrie werden Roboter benutzt, die als Werkzeug einen oder mehrere Greifer aufweisen, mittels denen Produkte umgesetzt werden.

Zum Einen gibt es von solchen Umsetz-Robotern mehrere grundsätzlich unterschiedliche Bauformen:
Der sogenannte serielle Roboter ist der klassische Roboter, bei dem der Roboterarm aus mehreren seriell aufeinander folgenden, gelenkig aneinander befestigten, Armteilen, wie etwa - in Anlehnung an den biologischen Arm bezeichnet - Roboterbasis oder Schulter, Oberarm, Unterarm und Roboterhand, besteht, die gelenkig miteinander verbunden sind, wobei die Roboterhand in der Regel das Werkzeug oder die Werkzeughalterung darstellt.

Ein solcher serieller Roboter hat einen relativ großen Arbeitsbereich, kann je nach Auslegung auch hohe Lasten im Vergleich zu seinem Eigengewicht bewegen, ist in seiner Geschwindigkeit jedoch begrenzt durch das Eigengewicht und die hierfür benötigte Beschleunigungs-Leistung.

Roboter mit sogenannter Parallel-Kinematik, häufig in der Bauform als Dreibein-Roboter oder auch so genannte Delta-Roboter, besitzen demgegenüber meist geringere zu bewegende Massen und sind dazu geeignet, relativ kleine Lasten sehr schnell zu bewegen, allerdings in einem zu den Abmessungen eines solchen Roboters relativ kleinen Arbeitsbereich.

Während üblicherweise bei einem Umsetz-Roboter als Greifkopf nur ein einzelner Greifer, z.B. ein Sauger, vorhanden ist, der in aller Regel auch nur ein einziges Produkt - in Ausnahmefällen auch z.B. mehrere übereinander gestapelte Produkte auf einmal - aufnehmen kann, sind für Spezialanwendungen auch Roboter bekannt, bei denen der Greifkopf mehrere Greifer aufweist, von denen jeder ein Produkt aufnehmen kann und die in ihrem Relativabstand zueinander veränderbar sind, was als Spreizung der Greifer bezeichnet wird.

Da dann meist jeder Greifer des Greifkopfes nacheinander je ein Produkt aufnimmt, bevor der Greifkopf zur Ablageseite bewegt wird, soll dadurch die für das Umsetzen eines Produktes benötigte Zeit reduziert werden.

Dies ist allerdings nur dann der Fall, wenn die für das Bewegen des Greifkopfes von der Aufnahmeseite zu Ablageseite benötigte Zeit, die sich bei dieser Vorgehensweise auf mehrere Produkte verteilt, relativ groß ist, also beispielsweise der entsprechende Weg relativ lang ist, in Relation zur Dauer der einzelnen Aufnahmevorgänge auf der Aufnahmeseite.

Wenn dies nicht nur in einer, sondern in zwei Raumrichtungen - vorzugsweise in der Aufsicht auf die Aufnahmefläche betrachtet, auf der die Produkte dargeboten werden - möglich ist, wird von einer so genannten Kreuzspreizung gesprochen.

Solche Anwendungsfälle erfüllen jedoch in aller Regel als Voraussetzung die Besonderheit, dass die aufzunehmenden Produkte nicht völlig ungeordnet dargeboten werden, sondern in der Aufsicht betrachtet in zumindest einer Dimension oder gar beiden Dimensionen geordnet dargeboten werden. Somit ist - wiederum vorzugsweise in der Aufsicht betrachtet - das für das Aufnehmen herzustellende Greifer-Muster - also die Relativposition der Greifer zueinander innerhalb des Greifkopfes - passend auf ein Aufnahmemuster, zumindest in einer horizontalen Raumrichtung immer das gleiche, was die Steuerung vereinfacht.

Dabei ist ferner zu unterscheiden, ob die zu handhabenden Produkte in der Aufsicht betrachtet
- entweder rotationssymmetrisch sind und/oder ihre Drehlage um die Hochachse für den Umsetzvorgang nicht relevant ist
- oder die Produkte in der Aufsicht nicht rotationssymmetrisch sind und/oder eine bestimmte Drehlage um die Hochachse beim Aufnehmen und/oder Ablegen erfordern, denn dann ist in der Regel als weitere steuerbare Achse eine gesteuerte Drehbarkeit jedes einzelnen Greifers um seine Hochachse notwendig, was eine verfahrenstechnisch deutlich aufwändigere Situation darstellt.

### III. Darstellung der Erfindung

### a) Technische Aufgabe

Es ist daher die Aufgabe gemäß der Erfindung, ein Verfahren sowie eine Vorrichtung zum mindestens Aufnehmen, vorzugsweise auch Ablegen und damit Umsetzen, von insbesondere vollständig ungeordnet dargeboten Produkten zur Verfügung zu stellen, die schneller ist als das Umsetzen mit nur einem einzigen Greifer, ohne die Komplexität und Anzahl der zu steuernden Bewegungen/Achsen des Roboters, insbesondere dessen Greifkopfes, zu stark zu erhöhen.

### b) Lösung der Aufgabe

Diese Aufgabe wird durch die Merkmale der Ansprüche 1 und 14 gelöst. Vorteilhafte Ausführungsformen ergeben sich aus den Unteransprüchen.

Hinsichtlich des Verfahrens wird diese Aufgabe dadurch gelöst, dass vor dem Aufnahmevorgang, also während der Annäherung des Greifkopfes an die festgelegte, aufzunehmende Gruppe von Produkten, die sog. Aufnahme-Gruppe, das Greifer-Muster zumindest teilweise auf das Aufnahme-Muster, in denen sich die aufzunehmenden Produkt der Aufnahme-Gruppe zueinander befinden, eingestellt wird.

Die Relativ-Positionen der aufzunehmenden Produkte zueinander in der Aufnahme-Gruppe bilden ein Aufnahme-Muster, die Relativ-Positionen der Greifer zueinander im Greifkopf bilden ein Greifer-Muster.

Insbesondere entspricht die Anzahl der Produkte der Aufnahme-Gruppe der Anzahl der Greifer des Greifkopfes.

Zusätzlich wird - ebenfalls vor dem Aufnehmen der Gruppe von Produkten - der Greifkopf um eine Hochachse so gedreht, dass sich in der Aufsicht betrachtet das Greifer-Muster zumindest teilweise auch in der gleichen Drehlage wie das Aufnahme-Muster befindet, sodass es sich mit diesem deckt, wenn sich der Greifkopf über der Gruppe der aufzunehmenden Produkte befindet, insbesondere das Greifer-Muster sich über dem Aufnahme-Muster befindet.

Wenn dann der Greifkopf auf die Gruppe von Produkten abgesenkt wird, können diejenigen Greifer des Greifkopfes, unter den sich nun jeweils ein Produkt befindet, ein solches Produkt aufnehmen, sei es gleichzeitig oder kurz hintereinander.

Dabei ist die gleichzeitige Aufnahme zu bevorzugen, da sie nicht nur Zeit spart, sondern nur eine Absenkbarkeit des Greifkopfes insgesamt erfordert und nicht eine Absenkbarkeit jedes einzelnen Greifers relativ zum Greifkopf einzeln gesteuert möglich sein muss.

Da die Greifer sehr häufig als Sauger ausgebildet sind, wird im Rahmen der Erfindung meistens nur von Saugern gesprochen, was nicht bedeuten soll, dass die Erfindung auf Sauger als Greifer beschränkt ist.

Wenn vorliegend von einem einzelnen Produkt gesprochen wird, welches von je einem Greifer ergriffen wird, so kann dies im Einzelfall auch eine Mehrzahl von Produkt-Teilen sein, die ein solches Produkt umfasst, beispielsweise eine zusammengehörige Gruppe von Produkt-Teilen, die gemeinsam als Produkt ergriffen und gehandhabt wird, beispielsweise ein Stapel von Produkten.

Ebenso kann es sein, dass ein Produkt so groß und/oder so schwer ist, dass es von zwei oder mehr Greifern oder Saugern gleichzeitig gehalten werden muss. In einer solche Gruppe von Greifern oder Saugern befinden sich dann meist die Greifer oder Sauger immer in unveränderter Relativposition zueinander und werden als ein einheitlicher Greifer oder Sauger im Sinne der Erfindung betrachtet.

Sobald jeder Greifer oder Sauger des Greifkopfes ein Produkt aufgenommen hat, wird der Greifkopf nach Hochheben zusammen mit den Produkten von der Aufnahme-Fläche, auf der sich die aufzunehmenden Produkte befanden, also dem Aufnahme-Bereich, wegbewegt, vorzugsweise in Richtung Ablage-Bereich.

Für den beschriebenen Vorgang müssen die Aufnahme-Positionen der einzelnen Produkte der Aufnahme-Gruppe auf der Aufnahme-Fläche bekannt sein, insbesondere die Relativ-Positionen der Produkte der Aufnahme-Gruppe zueinander, was in der Regel mittels eines Scanners erfolgt oder aus anderen Quellen bereits vorgegeben wird.

Der erfindungsgemäß bevorzugte Fall besteht darin, dass der Greifkopf nur zwei Greifer oder Sauger umfasst.

Dann wird - gegenüber einem Greifkopf mit nur einem einzigen Greifer oder Sauger - nur eine weitere steuerbare Achse benötigt, nämlich als steuerbarer Parameter der Abstand des jeweiligen Saugers zu einem Referenzpunkt des Greifkopfes - meist der Mitte des Greifkopfes zwischen den beiden Saugern und/oder der Hochachse des Greifkopfes, um die dieser gesteuert drehbar ist - wodurch auch der Abstand der beiden Sauger zueinander gesteuert wird. Vorzugsweise werden die beiden Greifer gegensynchron, insbesondere ausschließlich gegensynchron, zu diesem Referenzpunkt bewegt.

Vorzugsweise werden die beiden Sauger, insbesondere in der Aufsicht betrachtet, linear entlang einer Linie verschoben, die vorzugsweise durch den Referenzpunkt und/oder durch die Mitten der beiden Sauger verläuft, oder die beiden Sauger werden um jeweils eine Schwenkachse verschwenkt und verändern dadurch ihren Abstand zueinander, wobei vorzugsweise die beiden Schwenkachsen identisch sind.

Wenn der Greifkopf mehr als zwei Sauger umfasst, werden dennoch bevorzugt zunächst nur zwei Sauger zueinander auf einen Sauger-Abstand entsprechend dem Abstand zweier Produkte, also einer 1. Teil-Gruppe der Aufnahme-Gruppe, gebracht und durch Drehung des Greifkopfes um dessen Hochachse dieser Teil des Sauger-Musters in die gleiche Drehlage wie das Aufnahme-Muster in Form der beiden als erstes aufzunehmenden Produkte gebracht.

Dann wird durch Absenken des Greifkopfes gleichzeitig je einer der beiden zuvor auf den Abstand entsprechend der nun aufzunehmenden beiden Produkte gebrachten Sauger auf diese abgesenkt und nimmt je eines dieser Produkte auf.

Daraufhin wird der Greifkopf zunächst zusammen mit den beiden Produkten angehoben und ein noch unbeladener Sauger des Greifkopfes über ein weiteres Produkt der Aufnahme-Gruppe bewegt, auf dieses abgesenkt, von diesem Sauger aufgenommen und der Greifkopf zusammen mit nun drei Produkten wieder angehoben und so fort, bis alle Sauger des Greifkopfes ein Produkt halten.

Dabei müssen die weiteren aufzunehmenden Produkte nach dem Aufnehmen der ersten beiden Produkte durch die ersten beiden Greifer nicht einzeln von einzelnen Sauger nacheinander erfasst werden, sondern auch dies kann jeweils gruppenweise geschehen in Form von jeweils wie beim ersten Schritt zwei noch unbeladenen Saugern des Greifkopfes, die zunächst auf einen Abstand entsprechend zweier noch aufzunehmender Produkte, also einer 2. Teil-Gruppe der Aufnahme-Gruppe, gebracht und durch Drehung um die Hochachse des Greifkopfes in deren Drehlage gebracht wird.

Der Steuerungsaufwand steigt jedoch mit jedem separat zu steuernden Sauger-Abstand zwischen zwei Saugern eines Greifkopfes, der separat einstellbar sein soll, wofür also bei beispielsweise vier Saugern an einem Greifkopf - wovon der Sauger-Abstand zwischen je zwei Saugern definiert zu einem Referenzpunkt des Greifkopfes einstellbar sein - bereits zwei Parameter zusätzlich steuerbar sein müssen, also zwei zusätzliche steuerbare Achsen benötigt werden.

Dies kann vermieden werden, wenn die Abstände aller zueinander benachbarter Sauger des Greifkopfes immer nur synchron zueinander veränderbar sind, sodass dann auch bei mehr als zwei Saugern pro Greifkopf nur ein einziger Parameter, nämlich dieser Abstand, gesteuert werden muss. Bei einer solchen synchronen Abstandsveränderung aller benachbarter Sauger muss zusätzlich auch bekannt sein, wie sich der Abstand der einzelnen Sauger von diesen Referenzpunkt verändert und welches der aktuelle Abstand ist, während der Abstandsveränderung der Sauger relativ zueinander.

Wenn beispielsweise vier Sauger, die auf einer Linie liegen, nur in Richtung dieser Verbindungslinie bewegt werden können, so kann der Referenzpunkt
- entweder die Position eines der äußersten dieser Sauger sein, dessen Position nie verändert wird,
- oder die Mitte dieser Vierergruppe, also die Mitte zwischen den beiden innersten Sauger, wobei dann sowohl die beiden innersten als auch die beiden äußersten Sauger zu diesem Referenzpunkt jeweils gegensynchron bewegt werden, und zwar so, dass zwei benachbarte Sauger über alle Gruppen von zwei benachbarten Saugern ihren Abstand jeweils synchron ändern können, und insbesondere kann als Referenzpunkt der Schnittpunkt dieser Linie mit der Drehachse des Greifkopfes gewählt werden.

Bei einem solchen zeitlich hintereinander erfolgenden Aufnehmen von Produkten durch den Greifkopf sollte ferner darauf geachtet werden, dass beim Absenken des bereits teilweise beladenen Greifkopfes die von Saugern bereits gehaltenen Produkte nicht mit beim Absenken an dieser Stelle vorhandenen weiteren Produkten auf der Aufnahmefläche kollidieren. Dies sollte bei der Festlegung der aufzunehmenden Teil-Gruppe berücksichtigt werden und/oder bei der Wahl der einzunehmenden Drehlage des Greifkopfes beim Aufnehmen des nächsten Produktes oder der nächsten Teil-Gruppe von Produkten berücksichtigt werden.

Insbesondere dann, wenn das Ablegen der Produkte eine definierte Drehlage des Produktes um die Hochachse erfordert, beispielsweise wenn die Produkte in der Aufsicht betrachtet unrund sind oder nicht rotationssymmetrisch gestaltet sind, muss sich jedes Produkt an seinem Greifer spätestens bei der Ablage in einer definierten Relativlage befinden.

Hierfür besitzt jeder Sauger eine Null-Lage in Drehrichtung um seine Hochachse bezogen auf den Greifkopf. Meist befindet sich der Greifer auswechselbar an einer Werkzeug-Aufnahme, um je nach Produkt einen anderen Greifer daran befestigen zu können. Dabei ist es egal, ob die Werkzeugaufnahme um eine Hochachse relativ zum Greifkopf drehbar ist oder der Greifer gegenüber der Werkzeugaufnahme. Beide Alternativen werden im Rahmen der vorliegenden Erfindung als Drehbarkeit des Greifers um die Hochachse bezeichnet Die Drehlage der einzelnen Produkte relativ zur Auflagefläche muss für eine gezielte Ausrichtung des Produktes natürlich bekannt sein oder vor dem Aufnehmen des Produktes ermittelt werden.

Dann besteht das Ziel vorzugsweise darin, dass bei vollständig mit Produkten beladenem Greifkopf sich an jedem Greifer das Produkt in einer vorgegebenen Soll-Drehlage zum Greifkopf befindet. Da die Ist-Drehlage des Saugers zum Greifkopf sowie die Ist-Drehlage des Greifkopfes im Raum und insbesondere zum Unterarm beim Absenken und Ergreifen auf das in einer Ist-Drehlage im Raum befindliche Produkt allesamt bekannt sind, kann nach Aufnehmen des Produktes der Greifer in eine solche Drehlage relativ zum Greifkopf verdreht werden um seine Hochachse, dass sich das Produkt in der gewünschten Soll-Drehlage zum Greifkopf und letztendlich in der absoluten Soll-Drehlage befindet.

Dies erfordert in aller Regel eine separate steuerbare Drehbarkeit jedes einzelnen Greifers um dessen Hochachse und damit eine Vielzahl zusätzlich zu steuernder Parameter.

Alternativ kommt man mit einem einzigen zusätzlichen Parameter aus, wenn die Greifer nur synchron um ihre Hochachsen drehbar sind, was aber bei nicht rotationssymmetrischen Produkten dazu führt, dass entweder beim Aufnehmen oder beim Ablegen nicht mehrere Produkte gleichzeitig von mehreren sauber aufgenommen werden können, sondern immer nur ein Produkt von einem Saugern aufgenommen oder abgelegt werden kann, damit das Produkt an der Ablageposition danach die richtige Drehlage um die Hochachse einnimmt.

### (Ablage)

Der an vorzugsweise allen Saugern mit einem Produkt beladene Greifkopf wird nach dem Hochheben vom Aufnahme-Bereich wegbewegt und in aller Regel zu einem Ablage-Bereich bewegt, in dem Produkte in einem vorgegebenen Ablage-Muster und an vorgegebenen Ablage-Positionen abgelegt werden sollen, beispielsweise in Behälter, die auf einem Behälterband neben dem Produktband stehen, vorzugsweise angestaut sind und/oder die jeweils mehrere Ablage-Positionen, meist als körperlich ausgebildete sogenannte Nester, aufweisen.

Dann wird das Greifer-Muster des beladenen Greifers bereits während des Annäherns an den Ablage-Bereich auf das Ablage-Muster eingestellt und der Greifkopf durch Drehung um seine Hochachse so gedreht, dass die Drehlage des Greifer-Musters der Drehlage des Ablage-Musters entspricht.

Dann kann nach Absenken des Greifkopfes von jedem Greifer jeweils ein von ihm gehaltenes Produkt an je einer vorgesehenen Ablage-Position abgelegt werden.

Analog zum Aufnahme-Vorgang kann dies entweder für alle vom Greifkopf gehaltenen Produkte gleichzeitig erfolgen oder - falls nicht alle Greifer des Greifkopfes gemeinsam auf einmal das Ablage-Muster einnehmen können - nur ein Teil des Greifer-Musters in Übereinstimmung mit dem Ablage-Muster oder eines Teils des Ablage-Musters gebracht werden, sodass nur dieser Teil des Greifer-Musters im ersten Schritt seine Produkte an den entsprechenden Ablage-Positionen ablegt, die weiteren Greifer gegen ihre Produkte in einem oder mehreren weiteren Ablageschritten Ablegen.

Bevorzugt wird der Greifkopf bzgl. der vorgesehenen Ablage-Positionen, also des Ablage-Musters, so gestaltet, dass das Greifer-Muster insgesamt auf das Ablage-Muster eingestellt werden kann.

Sofern für die Ablage der Produkte an der Ablage-Position die Drehlage um die Hochachse relevant ist, werden spätestens bei der Ablage die Produkte durch Drehung der einzelnen Greifer um die Hochachse relativ zum Greifkopf und/oder des Greifkopfes um die Hochachse die Produkte an der Ablage-Position in die dort vorgesehene Drehlage im Raum, also die absolute Drehlage, gebracht.

Dies geschieht spätestens dann, wenn sich das Greifer-Muster ganz oder teilweise bereits mit dem Ablage-Muster deckt, und sich der Greifkopf bereits über dem Ablage-Muster befindet.

Beim Ablegen werden vorzugsweise die analog gleichen Vorgänge wie beim Aufnehmen von den Saugern relativ zum Greifkopf durchgeführt, zumal es sich um den gleichen Greifkopf mit den identischen Bewegungsmöglichkeiten seiner Sauger und des Greifkopfes selbst handelt.

Vorzugsweise werden also auch beim Ablegen die Abstände aller benachbarter Sauger zueinander nur synchron verändert werden, insbesondere die Abstände aller benachbarter Paare von Sauger zueinander immer gleich groß sein.

Dennoch können auch beim Ablegen je zwei Greifer zueinander auf einen Abstand, entsprechend dem Abstand zweier Ablage-Positionen des Ablage-Musters, gebracht werden und nach entsprechender Drehung des Greifkopfes um eine Hochachse zunächst nur diese beiden Sauger ihre Produkte an zwei vorgesehenen Ablage-Positionen ablegen.

Die übrigen beladenen Greifer legen erst danach und nach entsprechender Verfahrung und/oder Verdrehung des Greifkopfes und/oder der beladenen Greifer zum Greifkopf ihre Produkte in den weiteren vorgesehenen Ablage-Positionen ab, sei es wiederum einzeln oder in Teil-Gruppen, wobei jede Teil-Gruppe vorzugsweise je zwei Sauger des Greifkopf umfasst.

Auch beim Ablegen ist darauf zu achten, dass beim Ablegen von Produkten durch noch beladene Sauger nicht bereits unbeladene Sauger mit bereits abgelegten Produkten oder anderen Teilen auf der Ablageseite kollidieren.

Vorzugsweise sind hierfür bereits entladene Sauger deaktiviert, also bei mechanischen Greifern deren Greifarme in eine deaktivierte Stellung hochgeschwenkt oder bei Greifern in Form von Saugern diese Sauger nicht mit Saugluft beaufschlagt.

Hinsichtlich des für dieses Verfahren benötigten Umsetz-Roboters wird diese Aufgabe dadurch gelöst, dass dessen Greifkopf so ausgebildet ist, dass die Greifer in ihrer Relativ-Position zueinander und/oder in ihrer Relativ-Position zum Greifkopf, insbesondere einem Referenzpunkt des Greifkopfes, gesteuert verstellbar sind.

Vorzugsweise liegen in der Aufsicht betrachtet alle Greifer, insbesondere deren Mitten, bei um die Hochachse drehbaren Greifern ihre Hochachsen, auf einer gemeinsamen Linie, die die Verstell-Richtung definiert, indem die Sauger nur entlang dieser Linie gesteuert verstellbar sind.

Vorzugsweise sind die Sauger hierfür linear verfahrbar und die Linie ist eine Gerade.

Alternativ können die Sauger relativ zum Greifkopf jeweils um eine beabstandet von der Mitte des Sauger liegende Schwenkachse verschwenkbar sein, wobei die Schwenkachsen aller Sauger die Gleiche sein kann.

Unter der Mitte eines Saugers wird, in der Aufsicht betrachtet, bei einem runden oder regelmäßig polygonen Greifer oder Sauger deren geometrische Mitte verstanden, bei einem um eine Hochachse drehbaren Sauger die in der Aufsicht betrachtete Position dieser Hochachse, insbesondere auf Höhe der Greifebene, insbesondere der Aufnahmefläche des aufzunehmenden Produktes, ansonsten der Schwerpunkt der Fläche des Saugers.

Vorzugsweise ist der Greifkopf so ausgebildet, dass der Abstand aller Greifer in Verstell-Richtung nur synchron verstellt werden kann und/oder nur so verstellt werden kann, dass je zwei zueinander benachbarte Roboter in ihren Abständen immer nur synchron verstellt werden können, und die Abstände der benachbarten Paare von Robotern immer die gleichen sind.

In einer bevorzugten Ausführungsform umfasst der Greifkopf nur zwei Greifer, insbesondere Sauger, die in der Aufsicht betrachtet in ihrem Abstand zueinander und/oder zu einem Referenzpunkt des Greifkopfes gesteuert verstellbar sind. Dies hält den Steuerungsaufwand für den Greifkopf niedrig.

Vorzugsweise ist mindestens einer der beiden Greifer relativ zum anderen linear entlang der Verstell-Richtung verfahrbar.

Alternativ kann wenigstens einer der beiden Sauger um eine abseits der Abstands-Strecke angeordnete, aufrechte Schwenkachse verschwenkbar sein.

Falls die Sauger relativ zum Greifkopf um Hochachsen gesteuert verdrehbar sind, können diese entweder einzeln und unabhängig voneinander um ihre Hochachsen gesteuert verdrehbar sein. Zur Verringerung des Steuerungsaufwandes ist es jedoch auch möglich, den Greifkopf so auszugestalten, dass alle Sauger oder jeweils ein Teil der Sauger eines Greifkopfes nur synchron miteinander um ihre Hochachsen verdrehbar sind.

Dadurch ist es dennoch möglich - ggfs. mit mehr Zeitaufwand für zeitversetztes Aufnehmen und/oder Ablegen - vom Greifkopf herantransportierte Produkte im Ablage-Bereich nicht nur in einem vorgegebenen Ablage-Muster sondern für jedes Produkt auch mit der an seiner Ablage-Position vorgesehenen Soll-Drehlage abzulegen.

### c) Ausführungsbeispiele

Ausführungsformen gemäß der Erfindung sind im Folgenden beispielhaft näher beschrieben. Es zeigen:
- **Figur 1:**: eine Aufsicht auf eine bekannte Roboter-Straße mit mehreren Umsetz-Robotern,
- **Figur 2a, b:**: unterschiedliche Ansichten eines bekannten Roboterarmes eines Roboters aus Figur 1,
- **Figur 3a - e:**: in der Aufsicht betrachtet unterschiedliche Arbeitsstellungen eines Greifkopfes mit zwei Greifern zum Umsetzen von in der Aufsicht runden Produkten,
- **Figur 4a - f:**: in der Aufsicht betrachtet unterschiedliche Arbeitsstellungen eines Greifkopfes mit zwei Greifern zum Umsetzen von in der Aufsicht rechteckigen Produkten,
- **Figur 5a - g:**: in der Aufsicht betrachtet unterschiedliche Arbeitsstellungen eines Greifkopfes mit vier Greifern zum Umsetzen von in der Aufsicht runden Produkten.

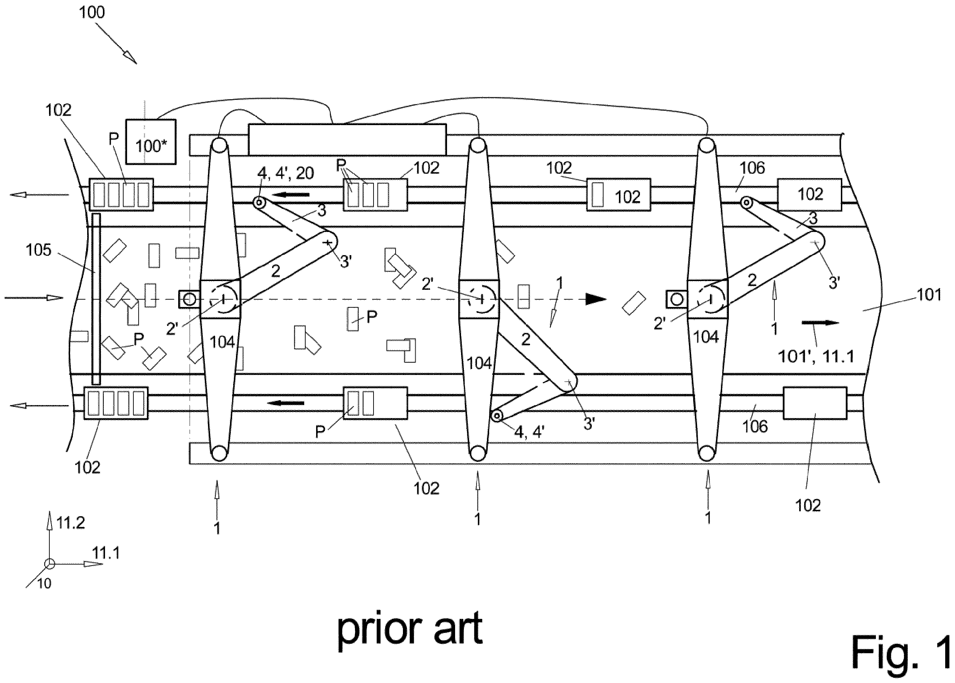

**Figur 1** zeigt eine bekannte Roboterstraße **100** als Umsetz-Vorrichtung, mittels der Produkte P, die ungeordnet auf einer Aufnahmefläche 101 - hier in Form eines laufenden Produkt-Bandes 101 - angeliefert werden und von einem der mehreren in dieser Durchlaufrichtung 101' hintereinander angeordneten Roboter 1 ergriffen und auf einer Ablagefläche 103 - in diesem Fall der Boden von Behältern 102 - abgelegt werden.

Zu diesem Zweck wird am Eingang vor dem Umsetz-Bereich, also vor dem ersten in Durchlaufrichtung 101' vorhanden Roboter 1, mittels eines Scanners 105 die Position und gegebenenfalls auch Drehlage der Produkte P auf dem Produktband 101 ermittelt und an die Steuerung 100* der Roboterstraße 100 weitergegeben, die auch mit den Antrieben aller anderen beweglichen Komponenten verbunden ist und beispielsweise die Geschwindigkeit des Produktbandes 101 in Durchlaufrichtung 101' kennt, so dass jederzeit die absoluten Produkt-Positionen der Produkte P auf dem Produktband 101 bekannt sind gegebenenfalls einschließlich ihrer Drehlage.

Die Behälter 102 stehen auf einem von in diesem Fall zwei Behälter-Bändern 106, welche in diesem Fall entgegen der Durchlaufrichtung 101' jeweils seitlich neben dem Produktband 101 laufen.

Von den Robotern 1 sind jeweils die oberhalb des Produktbandes 101 in der horizontalen Querrichtung zur Durchlaufrichtung 101' verlaufenden, meist aufgeständerten, Quertraversen 104 erkennbar, die als Roboter-Basis 104 dienen und an denen jeweils ein - in diesem Fall serieller - Roboterarm befestigt ist.

Dessen Oberarm 2 ist gegenüber der Roboterbasis 104 um eine sich in der Vertikalen 10 erstreckende Oberarm-Achse 2' in der horizontalen Ebene verschwenkbar, und ebenso ein Unterarm 3, der schwenkbar um eine aufrechte, insbesondere vertikale, Unterarm-Achse 3' am freien Ende des Oberarmes 2 befestigt ist.

Am freien Ende des Unterarmes 3 ist eine Hub-Einheit 4 angebracht, die die Vertikalbewegung eines an ihr befestigten Greifkopfes 20 bewirkt, der mindestens einen Greifer 22, insbesondere Sauger 22, aufweist.

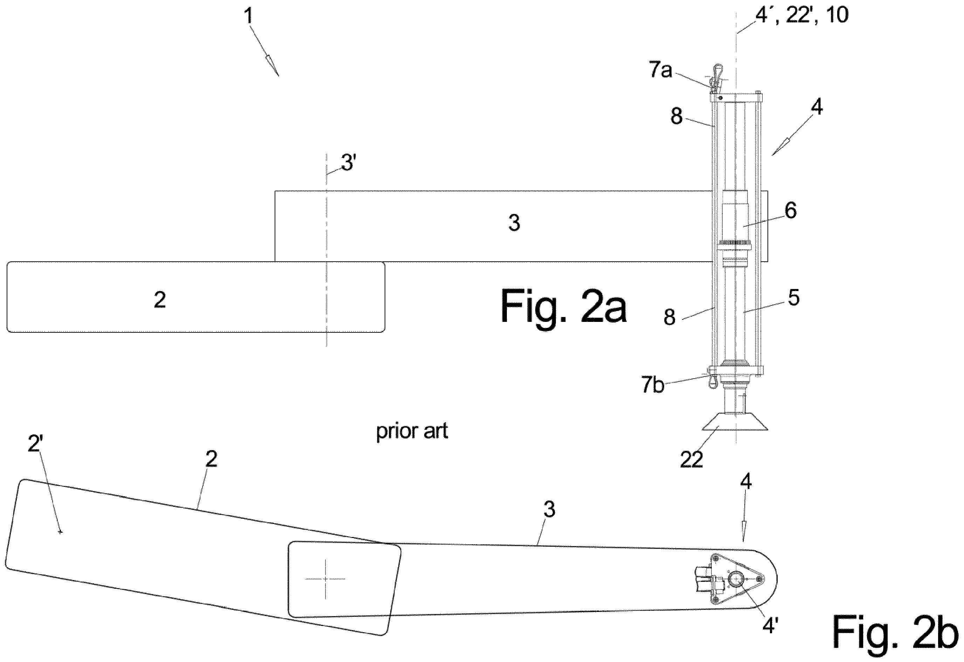

Die **Figuren 2a, b** zeigen in der Seitenansicht der **Figur 2a** und der Aufsicht der **Figur 2b** an einem nur schematisch dargestellten Roboterarm mit Oberarm 2 und Unterarm 3 beispielhaft eine Bauform der Hubeinheit 4, bei der eine Hubsäule 5, an deren unteren Ende ein Greifkopf 20 mit nur einem Sauger 22 angeordnet ist, der in der Vertikalen 10 relativ zu einer Führungshülse 6 gesteuert verfahrbar ist mittels eines an der Hubsäule 5 angreifenden, ebenfalls vertikal verlaufenden, endlichen Zahnriemens 8.

Der Zahnriemen 8 verläuft ebenfalls in Richtung der Vertikalen 10 und ist mit seinen beiden Befestigung-Enden 7a, b am unteren und oberen Ende der Hubsäule 5 befestigt und steht in Wirkverbindung mit einem gesteuert antreibbaren Antriebsritzel, welches in fester Höhenposition zum Unterarm 3 an der Hub-Einheit 4 befestigt ist.

Die Hubsäule 5 erstreckt sich vertikal durch die Führunghülse 6 hindurch, die in fixer Höhenposition am Unterarm 3 befestigt ist, vorzugsweise zusätzlich gesteuert drehbar ist um eine aufrecht stehende, insbesondere vertikal verlaufende, Hub-Achse 4', so dass die gesamte Hubsäule 5 und damit auch der daran befestigte Greifkopf 20 um diese aufrechte Hub-Achse 4' verdrehbar ist.

Bei anderen Bauformen der Hubeinheit 4 erfolgt der Antrieb des Greifkopfes 20 in der Vertikalen 10 auf andere Art und Weise und/oder nur der Greifkopf 20, beispielsweise der Sauger 22, ist um die aufrechte Hub-Achse 4' drehbar.

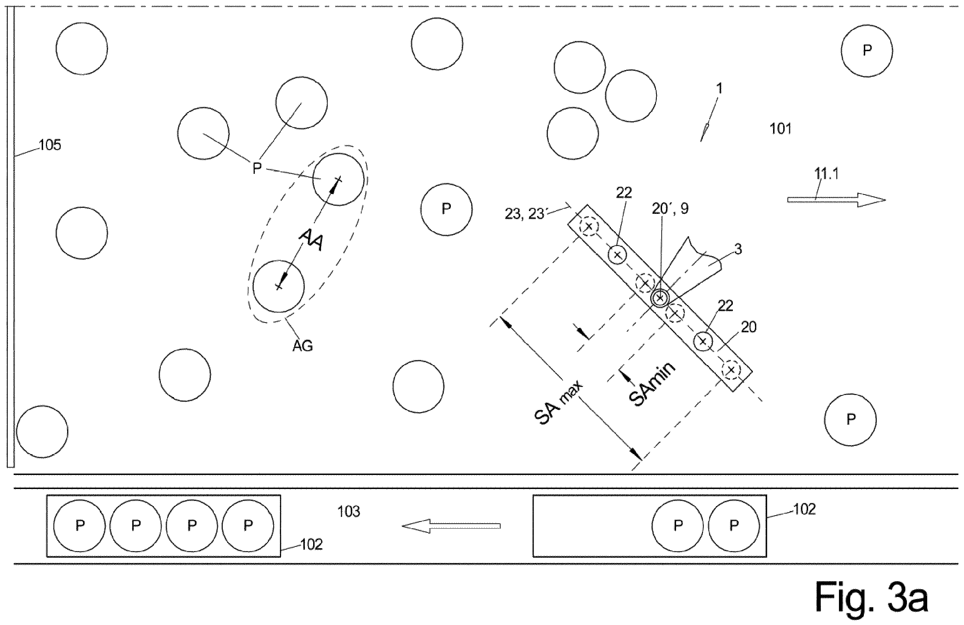

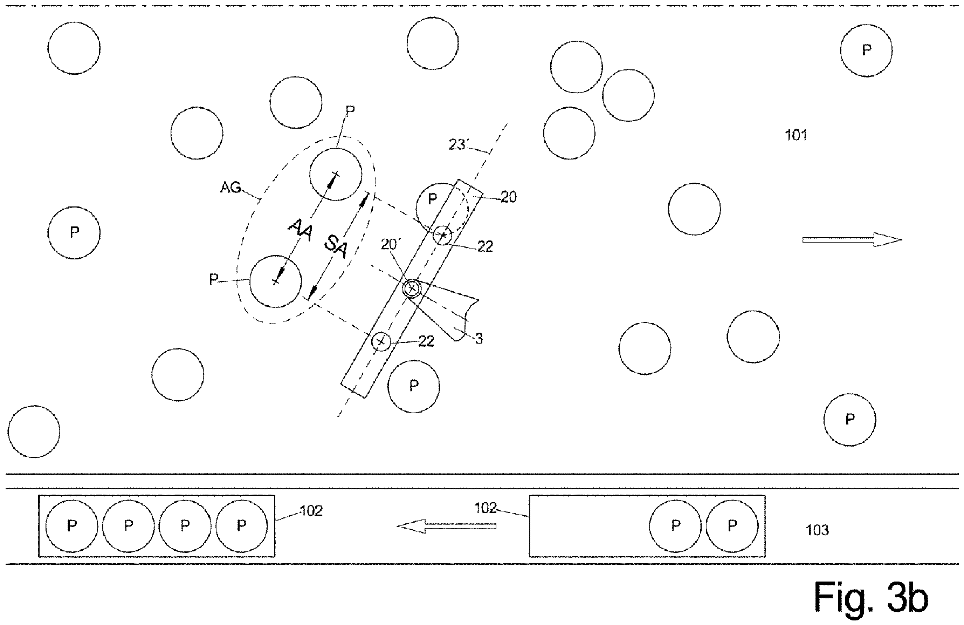

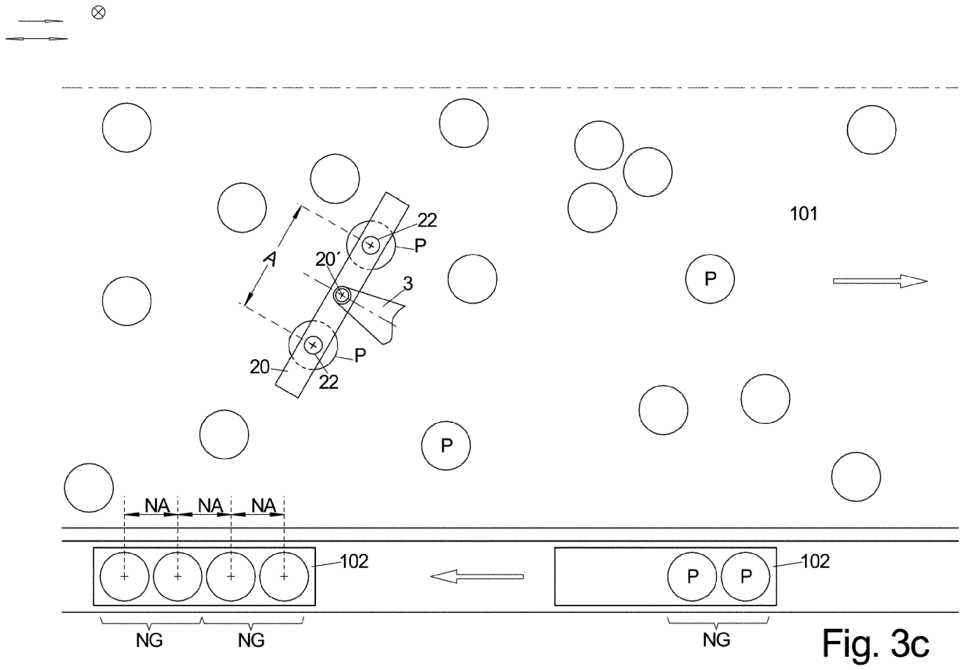

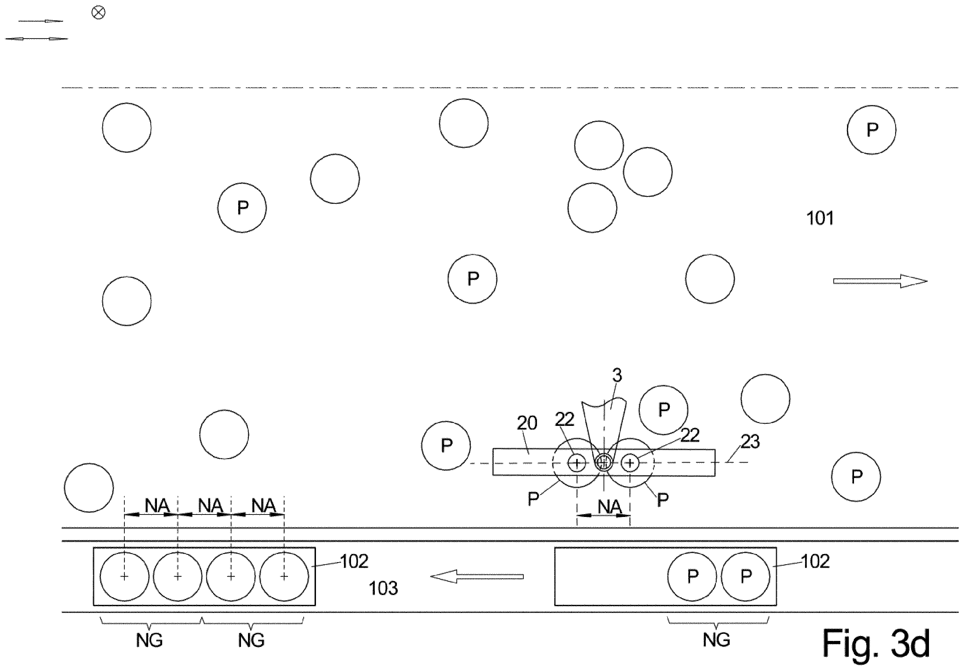

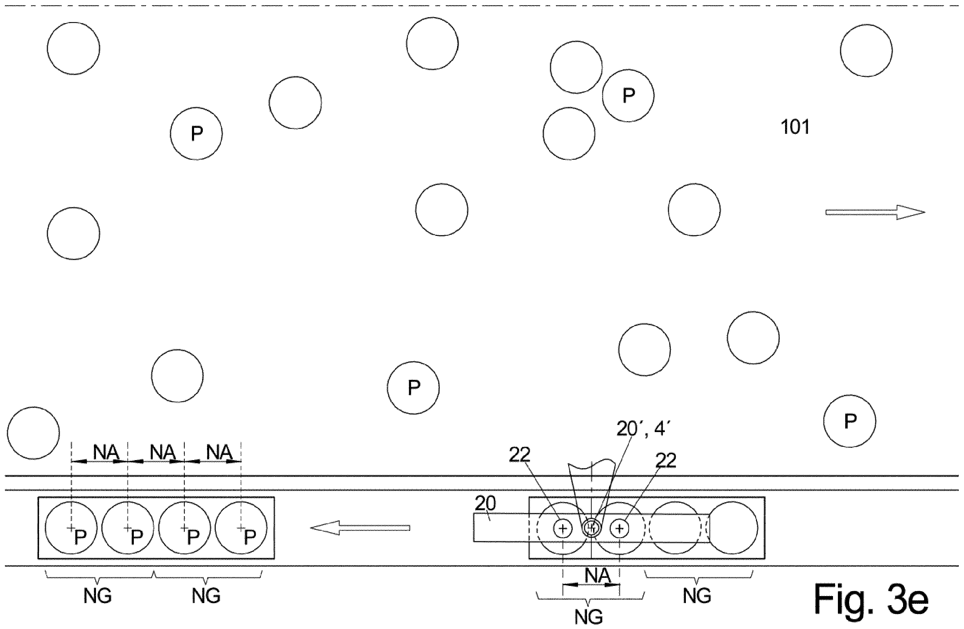

In den nachfolgend beschriebenen **Figuren 3** - **5** ist am unteren Ende der Hubeinheit 4 jeweils ein Greifkopf 20 mit nicht nur einem einzigen, sondern mehreren Greifern 22, insbesondere Saugern 22, montiert.

Anhand der **Figuren 3a** bis **3e** wird das Umsetzen von in der Aufsicht rotationssymmetrischen, in diesem Fall runden, Produkten **P** - die auf einer Aufnahmefläche **101** wie etwa einem Produktband **101,** ungeordnet herantransportiert werden - in definierte Nest-Positionen in Behältern **102** dargestellt, deren Böden eine Ablagefläche **103** bilden, wobei die Behälter **102** auf einem Behälterband **106** herantransportiert werden, welches auch in diesem Fall parallel, jedoch in Gegenrichtung, verlaufend zu der Aufnahmefläche **101** in Form des Produktbandes **101** angeordnet ist.

Die Behälter **102** enthalten jeweils vier Nestpositionen in einer Reihe hintereinander, die - wie in **Figur 3c** eingetragen - zwischen je zwei Nest-Positionen, also von Mitte zu Mitte der Nest-Position gemessen, jeweils einen Nest-Abstand **NA** besitzen.

Das Umsetzen erfolgt mittels eines an einem Roboterarm - von dem in den **Figuren 3a** bis **3e** nur das freie Ende des Unterarmes **3** dargestellt ist - insbesondere an dessen Hubereinheit 4 angeordneten Greifkopfes **20,** bei dem es sich um einen sogenannten Doppelpicker handelt, der zwei Greifer **22** in Form von Saugern **22** aufweist, die entlang des Greifkopfes **20** zwischen einem minimalen Sauger-Abstand **SAmin** und einem maximalen Sauger-Abstand **SAmax** zueinander verstellbar sind.

Dabei bewegen sich die Mittelpunkte der Sauger **22** auf einer Geraden **23,** die somit die die Verstell-Richtung **23'** der Sauger **22** darstellt.

In diesem Fall bewegen sich die Sauger **22** immer gegensynchron zu einem Referenzpunkt **9** am Greifkopf **20,** der ebenfalls auf der Geraden **23,** der Bewegungslinie, liegt und so angeordnet ist, dass er unabhängig vom Sauger-Abstand **SA** immer in der Mitte zwischen den beiden Saugern liegt.

Der Greifkopf **20** ist gegenüber dem ihn tragenden Unterarm **3** um eine aufrechte, insbesondere in der Vertikalen **10** verlaufende, Greifkopf-Achse **20'** verschwenkbar in der zur Greifkopf-Achse **20'** lotrecht stehenden Ebene, insbesondere einer horizontalen Ebene, die aufgespannt wird durch die beiden horizontalen, insbesondere lotrecht zueinander verlaufenden, Quer-Richtungen 11.1, 11.2, wovon eine, beispielsweise die erste Quer-Richtung 11.1, als übereinstimmend mit der Durchlaufrichtung 101' des Produktbandes 101 definiert werden kann.

Die Greifkopf-Achse **20'** ist so gewählt, dass sie nicht nur die Bewegungs-Linie **23** schneidet, sondern genau durch den Referenzpunkt **9** verläuft.

Zusätzlich ist der Greifkopf **20** gegenüber dem ihn tragenden Bauteil, in diesem Fall dem Unterarm **3,** in der Höhe, insbesondere der Vertikalen **10,** verlagerbar, vorzugsweise entlang der anhand der **Figuren 2a, b** beschriebenen, aufrecht stehenden Hub-Achse **4',** die in diesem Fall mit der Greifkopf-Achse **20'** zusammenfällt, um an den Saugern **22** aufgenommene Produkte **P** hochheben zu können.

Zur Begrenzung der zu steuernden Parameter ist bei dieser Bauform jedoch nur der Greifkopf **20** im Ganzen in der Hub-Richtung **4'** verlagerbar, nicht die einzelnen Sauger **22** unabhängig voneinander.

Der Umsetzvorgang läuft dabei wie folgt ab:
Die Steuerung **100*** der Roboterstraße **100** wählt nach in der Steuerung hinterlegten Kriterien zunächst eine Aufnahmegruppe **AG** bestehend aus zwei auf der Aufnahmefläche **101** befindlichen Produkten **P** aus, die in diesem Fall zwei Produkte umfasst entsprechend der Anzahl von zwei Saugern **22,** über die der Greifkopf **20** gemäß **Figur 3a** verfügt, und deren gegenseitiger Abstand zwischen **SAmin** und **SAmax** beträgt.

Anschließend werden gemäß **Figur 3b** die beiden Sauger **22** relativ zueinander und/oder zu ihrem Referenzpunkt **9** am Greifkopf **20** so bewegt, dass sie einen Sauger-Abstand **SA** zueinander einnehmen, der dem Aufnahme-Abstand **AA** der beiden Produkte **P** der ausgewählten Aufnahme-Gruppe **AG** entspricht.

Sowohl der Aufnahme-Abstand **AA** als auch der Sauger-Abstand **SA** werden von Mitte zu Mitte der Produkte bzw. der Sauger gemessen.

Ferner wird der Greifkopf **20** um seine aufrechte Greifkopf-Achse **20'** gegenüber dem Unterarm **2** so gedreht, dass die Verstell-Richtung **23'** der beiden Sauger **22** parallel zur Verbindungslinie zwischen den Mitten der beiden aufzunehmenden Produkte **P** der Aufnahme-Gruppe **AG** verläuft.

Des Weiteren wird der Greifkopf **20** mit den Saugern **22** gemäß **Figur 3c** genau oberhalb der Aufnahme-Gruppe **AG,** also den beiden ausgewählten, aufzunehmenden Produkten **P,** positioniert, sodass nach Absenken des Greifkopfes **20** und Aktivieren, also mit Saugluft beaufschlagen, der beiden Sauger **22** jeder davon je eines der beiden aufzunehmenden Produkt **P** ergreift, also ansaugt.

Vorzugsweise unmittelbar danach wird der Greifkopf **20** entlang der Hub-Achse **4',** die hier gleichzeitig die Greifkopf-Achse **20'** ist, hochgehoben, also relativ zum Unterarm **3** in der Höhe verstellt und damit die an den Saugern **22** befindlichen Produkte **P** von der Aufnahmefläche **101** abgehoben, sodass sie sich zumindest in einer solchen Höhe befinden, dass sie über die noch auf der Aufnahmefläche **101** befindlichen Produkte **P** hinwegbewegt werden können und auch über den Rand der Behälter **102,** in die sie abgelegt werden sollen, hinwegbewegt werden können.

Denn gemäß **Figur 3d** wird der Greifkopf **20** mittels des Roboterarmes in Richtung des Behälters **102** bewegt, in die die beiden vom Greifkopf **20** gehaltenen Produkte **P** abgelegt werden sollen.

Das Füllen der Behälter **102,** die jeweils 4 Ablage-Positionen, also Nester, besitzen, erfolgt nacheinander durch Füllen mit zwei Nest-Gruppen **NG,** die jeweils zwei Produkte **P** entsprechend der Anzahl von Saugern des Greifkopfes **22** umfassen, in diesem Fall einer Aufnahme-Gruppe **AG.**

Eine erste Nest-Gruppe **NG** befindet sich bereits in dem zur Ablage vorgesehenen Behälter **102.**

Beim Annähern des Greifkopfes **20** an diesen Behälter **102** werden die Sauger **22** auf einen Sauger-Abstand **SA** entsprechend dem Nest-Abstand **NA** der zu füllenden Nester in den Behältern **102** gebracht und der Greifkopf **20** um seine Greifkopf-Achse **20'** so gedreht, dass die Verstell-Richtung **23'** seiner Sauger **22** parallel verläuft zu der Linie, auf der sich die Nest-Positionen der abzulegenden Nest-Gruppe, hier des gesamten Behälters **102,** befinden, da auch dessen Nest-Positionen alle auf einer Linie liegen.

Dann wird gemäß **Figur 3e** der Greifkopf **20** so über dem Behälter **102** positioniert, dass sich die vom Greifkopf **20** gehaltenen beiden Produkte P über den beiden noch freien Nest-Positionen des Behälters **102** befinden, und durch Absenken und anschließendes Deaktivieren der Sauger 22 die daran hängenden beiden Produkte **P** als zweite Nest-Gruppe **NG** in dem Behälter **102** abgelegt wird, der dadurch vollständig gefüllt ist.

Anschließend kann der Greifkopf 20 mit den nun unbeladenen Greifern 22 wieder angehoben werden und ihm von der Steuerung **100*** damit der nächste Umsetzauftrag zugewiesen werden.

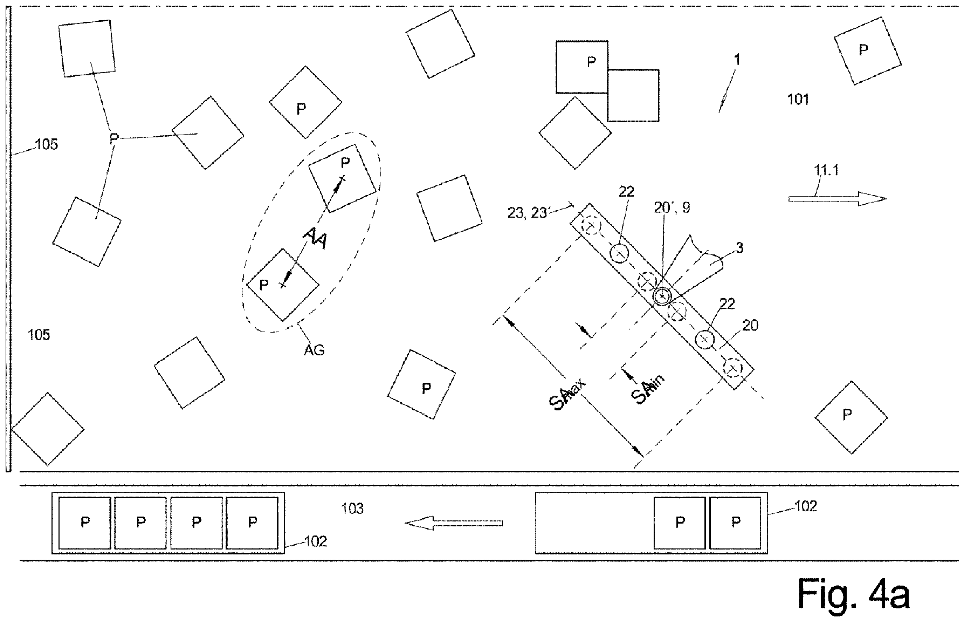

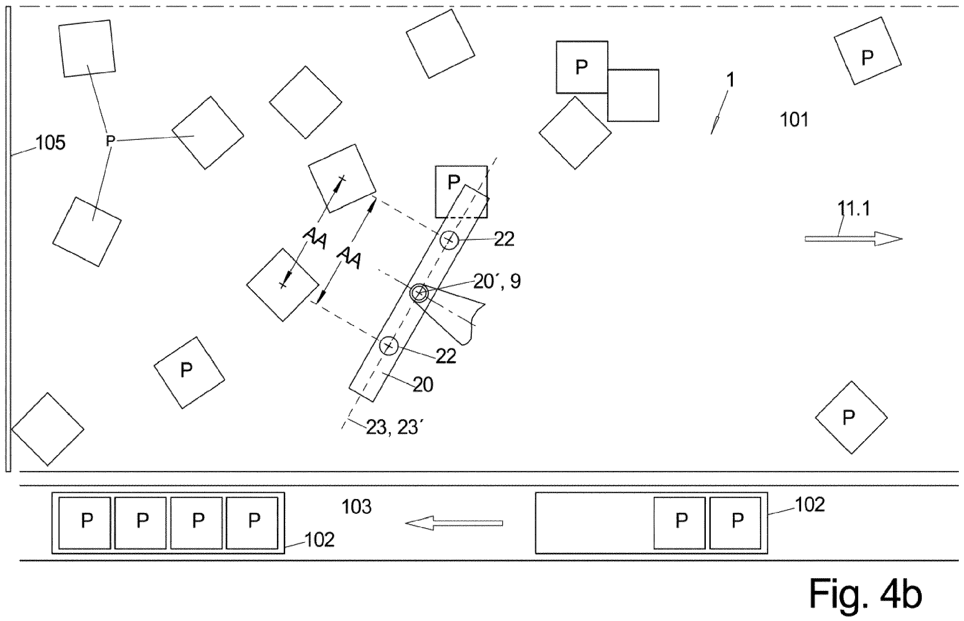

Die **Figuren 4a** bis **4f** zeigen den gleichen Vorgang, jedoch bei in der Aufsicht unrunden, in diesem Fall quadratischen, Produkten **P,** die in den Behältern **102** jeweils in einer korrekten in der Aufsicht betrachteten Drehlage abgelegt werden sollen.

Dabei entsprechen die **Figuren 4a** bis **c** den **Figuren 3a** bis **c,** und die anhand der **Figuren 3a** bis **c** beschriebenen Abläufe treffen auch **Figuren 4a** bis **c** zu.

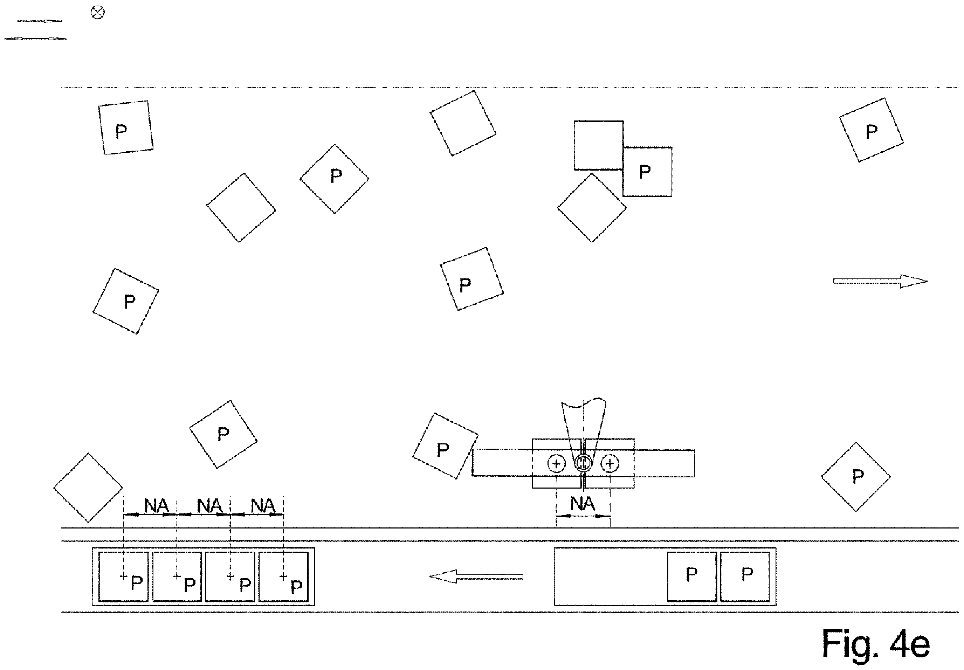

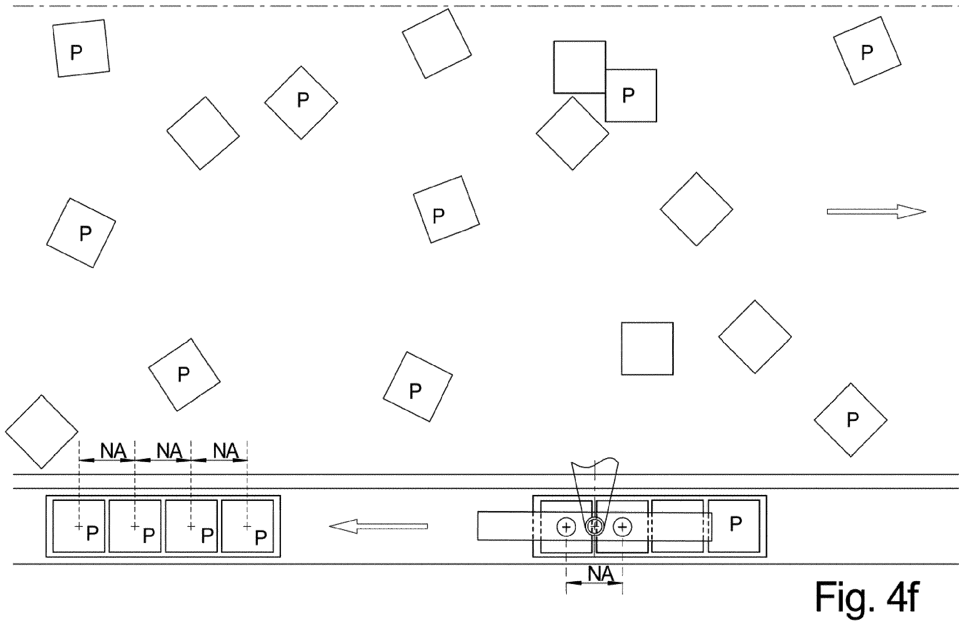

In gleicher Weise entsprechen **Figuren 4e****,** **f** den Figuren 3**d**, **e** und den dort beschriebenen Abläufen.

Wie alle **Figuren 4a** bis **f** erkennen lassen, sollen die Produkte P in den Behältern **102** abgelegt werden mit parallel zueinander verlaufenden Außenkanten ihrer - hier in der Aufsicht betrachtet - quadratischen Form.

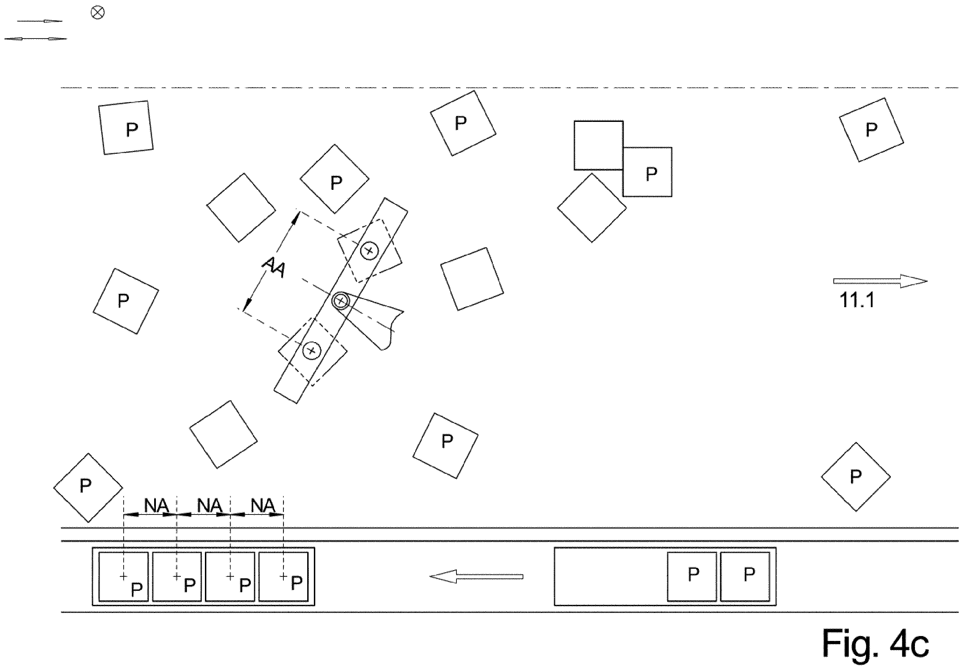

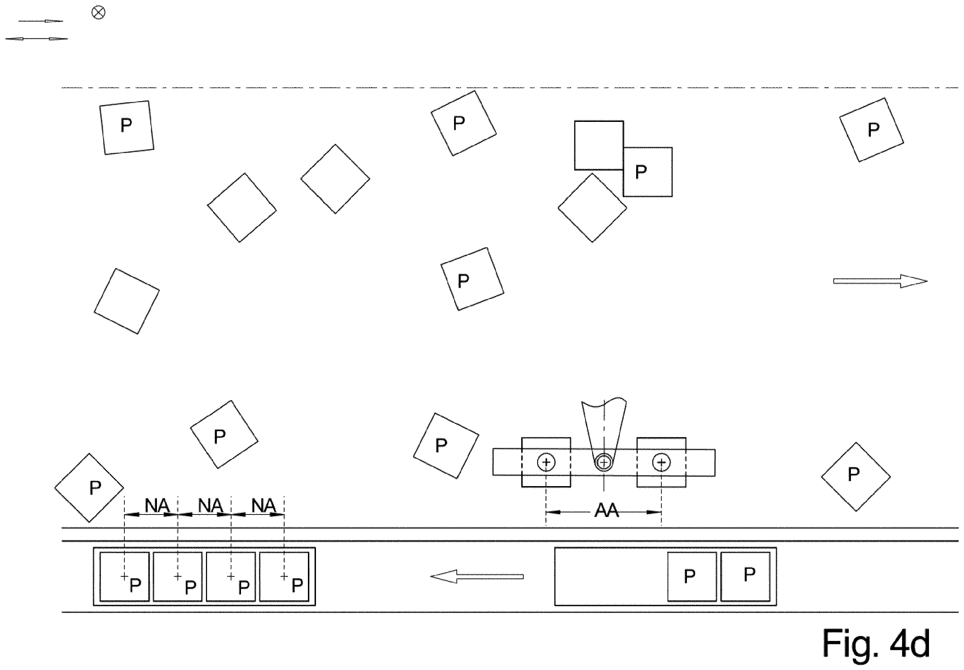

Deshalb müssen die gemäß **Figur 4c** bereits an den Saugern **22** gehaltenen Produkte **P,** die sich jedoch noch in unterschiedlichen Drehlagen relativ zueinander befinden - also noch nicht mit ihren gegeneinander weisenden Außenkanten parallel zueinander - zunächst gemäß **Figur 4d** auf eine solche Drehlage gebracht werden, weshalb die Sauger um ihre Sauger-Achsen **22',** die separat und unabhängig voneinander gesteuert verdrehbar sind, in die gewünschte Drehlage zueinander gebracht werden.

Dies kann gleichzeitig mit der Annäherung des Greifkopfes **20** an den Behälter **102** und/oder die Einstellung des Sauger-Abstandes **SA** auf den Nest-Abstand **NA** erfolgen.

Anschließend erfolgt das Ablegen im Behälter **102** gemäß der **Figuren 4e****,** **f** analog zu den **Figuren 3d** und **3e** und der dortigen Beschreibung.

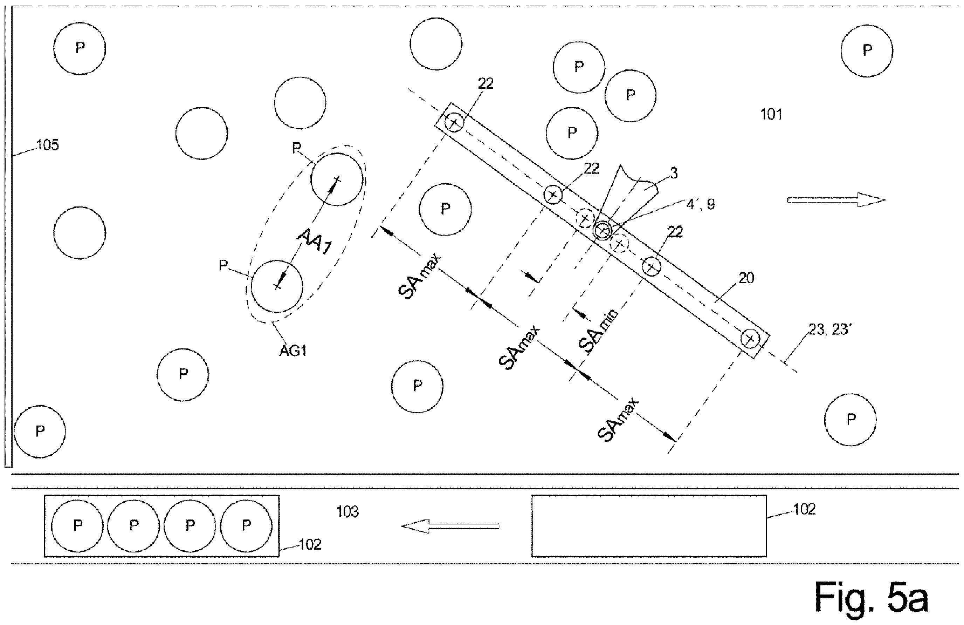

Die **Figuren 5a** bis **g** zeigen den Umsetzvorgang - mit in der Aufsicht runden Produkten wie in den **Figuren 3a** bis **e** - mit einem Greifkopf **20,** der vier entlang einer Verbindungslinie **23** angeordnete und entlang dieser Verbindungs-Richtung **23'** relativ zueinander und damit auch zu dem sie tragenden Greifkopf **20** verstellbare Greifer **22** aufweist.

Dabei bewegen sich die Greifer **22** relativ zu einem Referenzpunkt **9** des Greifkopfes **20** immer nur so, dass der Sauger-Abstand **SA** zwischen zwei entlang der Verstell-Richtung **23'** benachbarten Saugern **22** immer für alle Paare von benachbarten Saugern **22** der Gleiche ist.

Die Sauger **22** bewegen sich somit zu dem Referenzpunkt **9** - der hier in allen Bewegungszuständen immer in der Mitte zwischen den beiden mittleren Saugern **22** liegt - nicht synchron oder gegensynchron, sondern nur die bezüglich des Referenz-Punktes **9** einander jeweils gegenüberliegenden entsprechenden beiden Sauger **22,** die den gleichen Abstand zum Referenzpunkt 9 aufweisen, bewegen sich gegensynchron zueinander.

Die bezüglich des Referenzpunktes **9** weiter außen liegenden beiden Sauger bewegen sich jedoch mit einer jeweils größeren Verstell-Geschwindigkeit als die beiden inneren Sauger **22,** um den immer gleichen Sauger-Abstand **SA** aller benachbarten Sauger zueinander in jedem Bewegungszustand sicherzustellen.

Dadurch ist jedoch nur ein zu steuernder Parameter, beispielsweise die Bewegungsgeschwindigkeit der näher am Referenzpunkt **9** liegenden Sauger **22,** zu steuern, während die demgegenüber größere Bewegungsgeschwindigkeit der äußeren Sauger **22** hierzu in einem festen, insbesondere mittels eines Getriebes realisierbaren, Verhältnis steht.

Da der Greifkopf **20** nun vier Sauger **22** aufweist und vier Produkte auf einmal zur Ablageseite transportieren kann, kann der Greifkopf **20** einen zu füllenden Behälter **102** mit je vier Nestern auf einmal füllen.

Das Beladen der vier Sauger **22** des Greifkopfes **20** auf der Aufnahmeseite erfolgt jedoch in zwei Schritten:
Da die drei Sauger-Abstände **SA** zwischen den vier auf einer Linie **23** liegenden Saugern 22 nicht unabhängig voneinander verstellt werden können, und auf der Aufnahmefläche **101,** dem Produktband, niemals drei oder gar vier Produkte auf einer Linie liegend und mit gleichen Abständen zueinander vorkommen werden, wird zunächst nur eine erste Aufnahme-Gruppe **AG1** mit nur zwei Produkten **P** von der Steuerung **100*** ausgewählt, deren Produkte einen Aufnahme-Abstand **AA1** zueinander besitzen gemäß **Figur 5a****.**

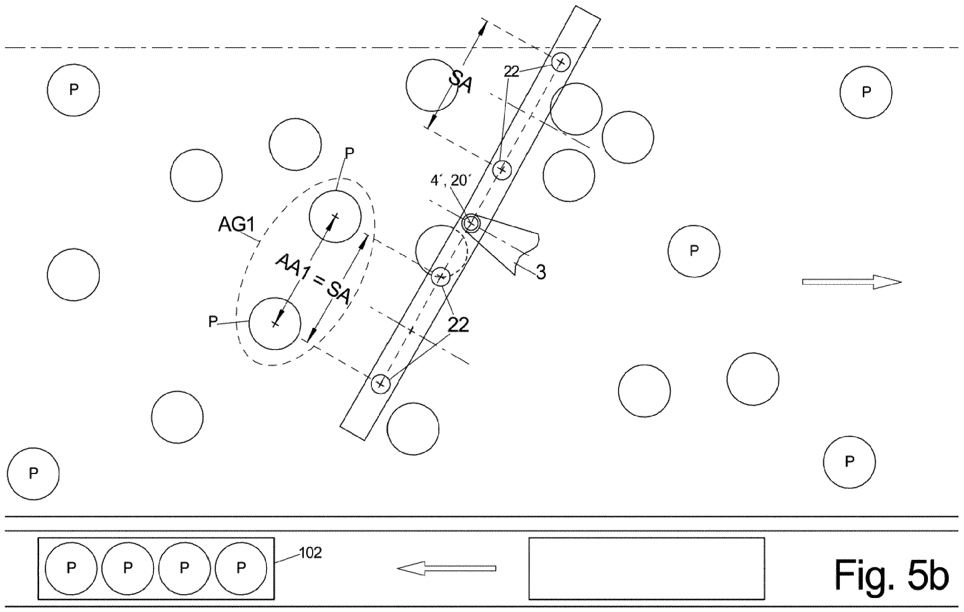

Anschließend werden - analog zu der Beschreibung in den **Figuren 3a** - **c** **-** die Sauger **22** des Greifkopfes auf diesen Aufnahme-Abstand **AA1** gebracht und die Verbindungs-Linie **23** der Sauger **22** durch entsprechende Drehung des Greifkopfes **20** um dessen Greifkopf-Achse **22'** parallel zur Verbindungslinie **23** zwischen den Mitten der beiden ausgewählten Produkte P gebracht gemäß **Figur 5b****.**

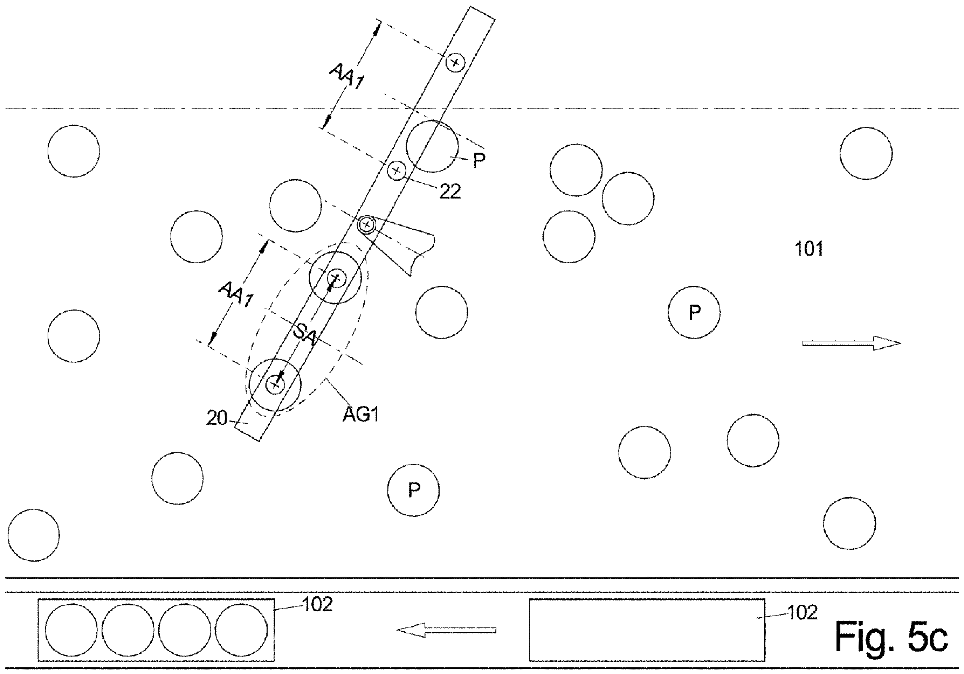

Anschließend wird gemäß **Figur 5c** der Greifkopf **20** so über der aufzunehmenden ersten Aufnahme-Gruppe **AG1** positioniert, dass sich die beiden auf derselben Seite vom Referenzpunkt **9** des Greifkopfes **20** liegenden Sauger **22** jeweils genau mittig über den Produkten **P** der aufzunehmenden Aufnahme-Gruppe **AG1** befinden und durch Absenken des Greifkopfes **20** und Aktivieren der Sauger **22** diese beiden Produkte angesaugt und durch Hochheben des Greifkopfes **20** von der Aufnahmefläche **101** hochgehoben werden können.

Dies ist unproblematisch, selbst wenn sich beim Absenken des Greifkopfes **20** zum Aufnehmen dieser Aufnahme-Gruppe **AG1** unter den beiden anderen Saugern **22** Produkte befinden sollten, da alle Produkte **P** in der Regel gleich hoch sind und der andere Sauger **22** damit die Oberseiten dieser Produkte höchstens berühren würde.

Da aber vorzugsweise nur die beiden Sauger **22** aktiviert, also mit Saugluft beaufschlagt, werden, die sich über den beiden aufzunehmenden Produkten **P,** also der Aufnahme-Gruppe **AG1,** befinden, wird von den anderen beiden Saugern **22** kein Ansaugen eines Produktes durchgeführt.

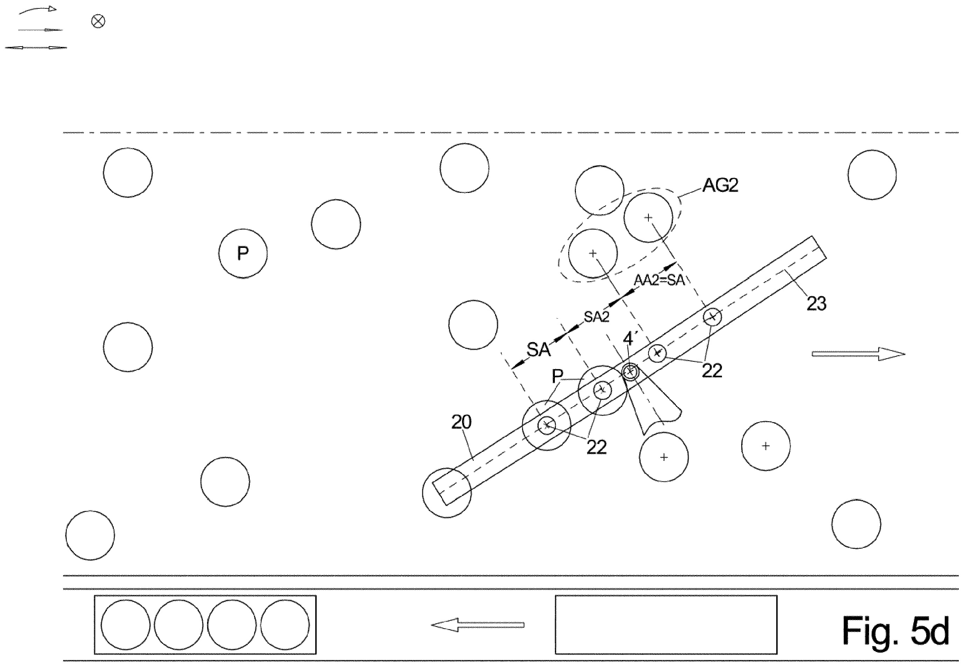

Anschließend wird von der Steuerung ein zweites Paar von Produkten in Form einer zweiten Aufnahme-Gruppe **AG2** ausgewählt, und die vier Sauger **22** des nach Aufnehmen der ersten Aufnahme-Gruppe **AG1** wieder hochgehobenen Greifkopfes **20** werden alle auf einen Sauger-Abstand **SA** entsprechend dem Aufnahme-Abstand **AA2** der beiden Produkte dieser zweiten Aufnahme-Gruppe **AG2** gebracht, wie in **Figur 5d** dargestellt, und der Greifkopf mit der Verbindungs-Linie **23** seiner Sauger **22** parallel zur Verbindungslinie zwischen den Mitten der beiden Produkte **P** der Aufnahme-Gruppe **AG2** gebracht, gemäß **Figur 5d****.**

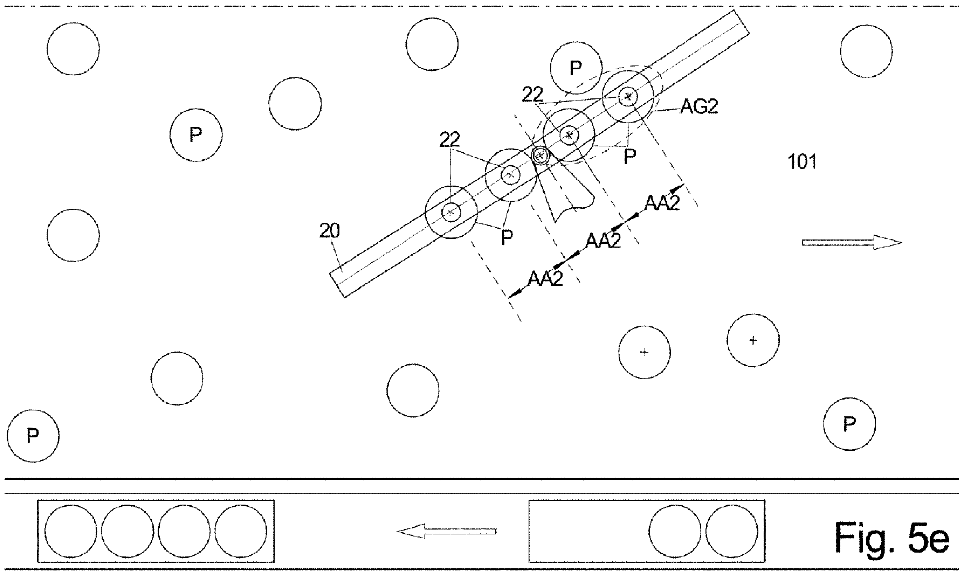

Anschließend können - gemäß **Figur 5e** - durch Positionieren der noch unbeladenen beiden Sauger **22** über den beiden Produkten der zweiten Aufnahme-Gruppe **AG2** aktiviert und diese beiden Sauger **22** durch Absenken des Greifkopfes **20,** Ansaugen dieser beiden Produkt **P** und Hochheben des Greifkopfes **20** auch die beiden anderen Sauger **22** mit je einem Produkt **P** beladen werden, sodass der Greifkopf **20** nun vier Produkte **P** trägt.

Wie **Figur 5e** deutlich zeigt, muss die Steuerung **100*** beim Auswählen der zweiten Aufnahme-Gruppe **AG2** auch berücksichtigen, dass sich in dem Bereich, indem sich beim Aufnehmen dieser zweiten Aufnahme-Gruppe **AG2** daneben die bereits beladenen beiden Sauger **22** des Greifkopfes **20** befinden, auf der Aufnahmefläche **101** keine anderen Produkte **P** liegen, mit denen die beim Absenken des Greifkopfes 20 bereits an den beiden ersten Saugern **22** Produkte **P** kollidieren könnten.

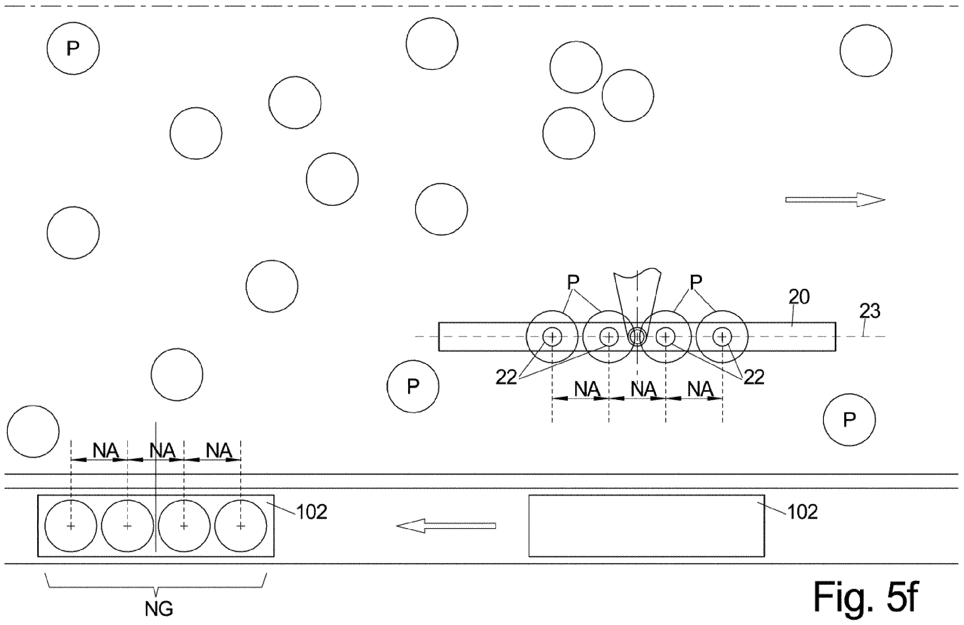

Anschließend wird gemäß **Figur 5f** der Sauger-Abstand **SA** aller benachbarten Sauger **22** im Greifkopf zueinander auf den Nest-Abstand **NA** gefahren, den die auf einer Verbindungslinie liegenden Nest-Positionen in Behälter **102** aufweisen.

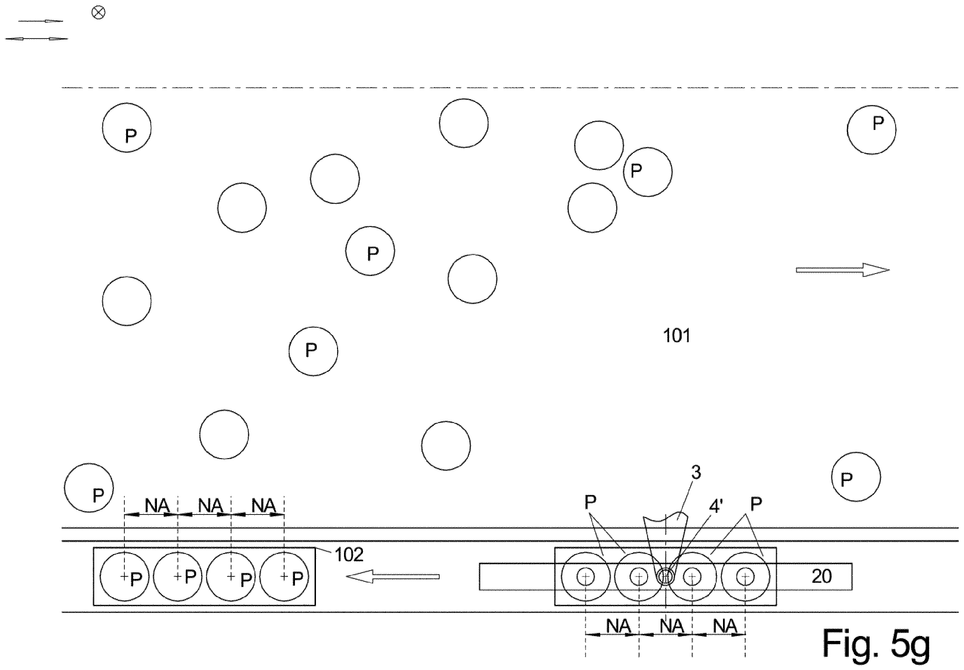

Nach Ausrichten der Verstell-Richtung **23'** durch entsprechendes Drehen des Greifkopfes **20** um dessen Greifkopf-Achse **20'** und Positionieren der vier vom Greifkopf **20** gehaltenen Produkte über dem Behälter **102,** insbesondere exakt über dessen Nest-Positionen, können die vier vom Greifkopf **20** gehaltenen Produkte **P** als gemeinsame Nest-Gruppe **NG** gemäß **Figur 5g** in den Behälter **102** abgesenkt und abgelegt werden, woraufhin der Greifkopf **20** nach Deaktivieren der Sauger **22** ohne die Produkte **P** nach oben hochgehoben werden kann und für einen nächsten Umsetz-Auftrag zur Verfügung steht.

### BEZUGSZEICHENLISTE

- 1: Roboter
- 2: Oberarm
- 2': Oberarm-Achse
- 3: Unterarm
- 3': Unterarm-Achse
- 4: Hub-Einheit
- 4': Hub-Achse
- 5: Hubsäule
- 6: Führungshülse
- 7a, b: Befestigungs-Ende
- 8: Zahnriemen
- 9: Referenzpunkt
- 10: Vertikale
- 11.1: 1. Querrichtung, Laufrichtung Aufnahmefläche
- 11.2: 2. Querrichtung

- 20: Greifkopf
- 20': Greifkopf-Achse
- 21: Werkzeug-Aufnahme
- 22: Sauger, Greifer
- 22': Greifer-Achse
- 23: Bewegungs-Linie, Gerade
- 23': Verstell-Richtung
- 100: Umsetzvorrichtung, Roboterstraße
- 100*: Steuerung
- 101: Aufnahmefläche, Produktband
- 102: Behälter
- 103: Ablagefläche
- 104: Quertraverse, Roboterbasis
- 105: Scanner
- 106: Behälterband

- AA, AA1: Aufnahme-Abstand
- AG: Aufnahme-Gruppe
- SA: Sauger-Abstand
- SAmax: maximaler Sauger-Abstand
- SAmin: minimaler Sauger-Abstand
- NA: Nest-Abstand
- NG: Nest-Gruppe
- P: Produkt

## Patentansprüche

1. **Verfahren** zum schnellen Aufnehmen und Abtransportieren von ungeordnet auf einer Aufnahme-Fläche **(101)** dargebotenen Produkten (P), deren Produkt-Positionen auf der Aufnahme-Fläche **(101)** bekannt sind, mittels je einem von mehreren Greifern **(22),** insbesondere Saugern **(22)** eines Greifkopfes **(20)** eines Roboters **(1),** indem
a) eine aufzunehmende Aufnahme-Gruppe (AG) von Produkten (P) automatisch bestimmt wird, deren Relativ-Positionen der Produkte (P) in der Aufnahme-Gruppe (AG) zueinander ein Greifer-Muster bilden,
b) die Relativ-Positionen der Produkte (P) in der Aufnahme-Gruppe (AG) zueinander, also das Aufnahme-Muster, bekannt ist oder ermittelt wird,
c) der Greifkopf (20) über die Aufnahme-Gruppe (AG) bewegt wird und auf diese abgesenkt wird,
**dadurch gekennzeichnet, dass**
d) spätestens während des Absenkens die Relativ-Position der Greifer (22) im Greifkopf (20) zueinander, also das Greifer-Muster, in einen Zustand entsprechend wenigstens einem Teil des Aufnahme-Musters gebracht wird,
e) spätestens während des Absenkens der Greifkopf (20) um eine Hochachse (20') gedreht wird, bis sich in der Aufsicht betrachtet der sich mit dem Aufnahme-Muster übereinstimmende Teil des Greifer-Musters mit dem Aufnahme-Muster deckt,
f) am Ende des Absenkens je ein Produkt (P) von je einem Greifer (22), insbesondere Sauger (22), erfasst wird, vorzugsweise bei der gleichen Absenkbewegung und/oder gleichzeitig, und der Greifkopf (20) zusammen mit den Produkten (P) hochgehoben und wegbewegt wird.
(Positionsbestimmung)

2. Verfahren nach Anspruch 1,
**dadurch gekennzeichnet, dass**
- die Anzahl der Produkte (P) der Aufnahme-Gruppe (AG) der Anzahl der Sauger (22) des Greifkopfes (20) entspricht
und/oder
- vor dem Aufnehmen von Produkten (P) deren Produkt-Positionen auf der Aufnahme-Fläche (101) ermittelt werden.
(Nur 2 Greifer)

3. Verfahren nach einem der vorhergehenden Ansprüche,
**dadurch gekennzeichnet, dass**
- die Aufnahme-Gruppe (AG) nur zwei Produkte umfasst,
- der Greifkopf (20) nur zwei Sauger (22) umfasst und
- innerhalb des Greifkopfes (20) nur der Sauger-Abstand (SA) der beiden Sauger (22) relativ zueinander und/oder zu einem Referenzpunkt (9) des Greifkopfes (20) gesteuert verändert wird.
(Produkte unrund oder Drehlage nicht egal)

4. Verfahren nach einem der vorhergehenden Ansprüche,
wobei auch die Drehlage (definieren) der Produkte bekannt ist,
**dadurch gekennzeichnet, dass** vor Schritt f)
- die in der Aufsicht betrachteten Drehlagen der Produkte (P) der Aufnahme-Gruppe (AG) bekannt sind oder automatisch ermittelt werden
und/oder
- die Sauger (22) um ihre Hochachsen (4', 22') sich in einer entsprechenden, definierten Drehlage befinden oder in eine solche gebracht werden.
(Mehr als 2 Greifer)

5. Verfahren nach einem der vorhergehenden Ansprüche,
**dadurch gekennzeichnet, dass**
- die Aufnahme-Gruppe (AG) mehr als zwei Produkte (P) umfasst,
- der Greifkopf (20) mehr als zwei Sauger (22) umfasst und
- im Schritt d) zwei, insbesondere nur zwei, Sauger (22) zueinander auf ein Teil-Sauger-Muster mit einem Sauger-Abstand (SA), entsprechend dem Produkt-Abstand (PA) zweier Produkte (P) der Aufnahme-Gruppe (AG), das Teil-Aufnahme-Muster, gebracht werden,
im Schritt e)
der Greifkopf (20) um seine Hochachse (20') gedreht wird, bis sich in der Aufsicht betrachtet das Teil-Sauger-Muster mit dem Teil-Aufnahme-Muster deckt,
im Schritt f)
f1) je ein Produkt Teil des Aufnahme-Musters von je einem von nur zwei auf deren Abstand eingestellten Saugern erfasst wird,
f2) der Greifkopf (20) angehoben wird,
f3) wenigstens ein noch unbeladener Sauger (22) über je ein weiteres Produkt (P) der Aufnahme-Gruppe (AG) bewegt wird,
f4) der Greifkopf (20) abgesenkt wird,
f5) der wenigstens eine noch unbeladene Sauger (22) das je eine weitere Produkt (P) erfasst,
f6) der Greifkopf (20) zusammen mit den Produkten (P) hochgehoben und wegbewegt wird.

6. Verfahren nach einem der vorhergehenden Ansprüche,
**dadurch gekennzeichnet, dass**
- die Schritte f3) und f4) mit zwei noch unbeladenen Saugern (22) gleichzeitig durchgeführt werden,
spätestens im Schritt f4)
- die beiden unbeladenen Sauger (22) auf den Abstand der beiden noch aufzunehmenden Produkte (P) der Aufnahme-Gruppe (AG) gebracht werden,
- der Greifkopf (20) um seine Hochachse (20') so gedreht wird, dass sich die beiden Greifer-Positionen der noch unbeladenen Sauger (22) mit den beiden Produkt-Positionen der noch aufzunehmenden Produkte (P) decken.

7. Verfahren nach einem der vorhergehenden Ansprüche,
**dadurch gekennzeichnet, dass**
- vor Schritt f4) automatisch überprüft wird, dass beim Absenken des Greifkopfes (20) mit zum Teil bereits beladenen Saugern (22) und/oder daram gehaltener Produkte (P) keine Kollision des Greifkopfes (20), insbesondere der bereits beladenen Sauger (22), mit Produkten (P) auf der Aufnahme-Fläche (101) stattfindet,
- gegebenenfalls vorher der Greifkopf (20) um seine Hochachse (20') so gedreht und/oder horizontal verfahren wird, dass solche Kollisionen vermieden werden.

8. Verfahren nach einem der vorhergehenden Ansprüche,
**dadurch gekennzeichnet, dass**
- die Sauger-Abstände (SA) aller benachbarten Sauger (22) zueinander nur synchron verändert werden,
- insbesondere die Sauger-Abstände (SA) benachbarter Sauger des Greifkopfes (20) zueinander immer alle gleich groß sind,
und/oder
- alle Sauger (22) des Greifkopfes (20), insbesondere auch der Referenzpunkt (9), auf einer Linie (23) liegen, die die Verstell-Richtung (23') der Sauger (22) zueinander definiert,
- insbesondere die Linie (23) eine Gerade ist.
(Ablage)

9. Verfahren nach einem der vorhergehenden Ansprüche,
**dadurch gekennzeichnet, dass**
nach dem Wegbewegen der Greifkopf (20) über eine in einem Ablage-Muster angeordnete Gruppe von Ablage-Positionen auf einer Ablage-Fläche (103) für die Produkte (P) bewegt wird, wobei
g) spätestens während des Absenkens die Sauger (22) zueinander in eine Relativ-Position, das Greifer-Muster, entsprechend wenigstens einen Teil des Ablage-Musters gebracht werden,
h) spätestens während des Absenkens der Greifkopf (20) um eine Hochachse (20') gedreht wird, bis in der Aufsicht betrachtet sich der mit dem Ablage-Muster übereinstimmende Teil des Greifer-Musters mit dem Ablage-Muster deckt,
i) am Ende des Absenkens je ein Produkt (P) von je einem Sauger (22) abgelegt wird.
(Produkte unrund oder Drehlage nicht egal)

10. Verfahren nach einem der vorhergehenden Ansprüche,
- die vorgesehene Drehlage der Produkte (P) an ihrer Ablage-Position bekannt ist,
**dadurch gekennzeichnet, dass**
- vor dem Ablegen die Sauger (22) um ihre Hochachsen (22') in eine dementsprechende Drehlage gebracht werden,
und/oder
- alle Sauger (22) in der Aufsicht betrachtet mit ihren Mitten, insbesondere ihren Drehachsen (22'), auf einer Linie liegen.
(Mehr als 2 Ablage-Positionen in der Gruppe)

11. Verfahren nach einem der vorhergehenden Ansprüche,
**dadurch gekennzeichnet, dass**
- die Sauger-Abstände (AB) aller benachbarter Sauger (22) zueinander nur synchron verändert werden,
- insbesondere die Sauger-Abstände (AB) aller benachbarten Sauger (22) zueinander immer gleich groß sind,
- bei ungleichen Sauger-Abständen (AB) und/oder Richtungen der Sauger-Abstände (AB) der Ablagepositionen
- im Schritt g) zwei Sauger zueinander auf einen Abstand, das Greifer-Muster, entsprechend dem Abstand zweier Ablage-Positionen des Ablage-Musters gebracht werden,
- im Schritt h) der Greifkopf (20) um eine Hochachse (20') gedreht wird, bis in der Aufsicht betrachtet der sich mit dem Ablage-Muster übereinstimmende Teil des Greifer-Musters mit dem Ablage-Muster deckt,
im Schritt i)
i1) je ein Produkt (P) von je einem von nur zwei Saugern (22) abgelegt wird,
i2) der Greifkopf (20) angehoben wird,
i3) wenigstens ein noch beladener Sauger (22) über je eine weitere zu füllende Ablage-Position des Ablage-Musters bewegt wird,
i4) der Greifkopf (20) abgesenkt wird,
i5) der wenigstens eine noch beladene Sauger (22) das je eine weitere Produkt (P) an der zu füllenden Ablage-Position ablegt.

12. Verfahren nach einem der vorhergehenden Ansprüche,
**dadurch gekennzeichnet, dass**
- die Schritte i3) und i4) mit zwei noch beladenen Saugern (22) gleichzeitig durchgeführt werden,
spätestens vor Schritt i5)
- die beiden beladenen Sauger (22) auf den Nest-Abstand (AB) der beiden noch zu füllenden Ablage-Positionen gebracht werden,
- der Greifkopf (20) um die Hochachse (20') so gedreht wird, dass sich die beiden Greifer-Positionen der noch beladenen Sauger (22) mit den beiden zu füllenden Ablage-Positionen decken.

13. Verfahren nach einem der vorhergehenden Ansprüche,
**dadurch gekennzeichnet, dass**
- vor Schritt i4) automatisch überprüft wird, dass beim Absenken des Greifkopfes (20) mit zum Teil bereits unbeladenen Saugern (22) keine Kollision des Greifkopfes (20), insbesondere der bereits unbeladenen Sauger (22), mit Gegenständen, insbesondere Verpackungen, auf der Ablage-Fläche (103) stattfindet,
- gegebenenfalls vorher der Greifkopf (20) um seine Hochachse (20') so gedreht und/oder horizontal verfahren wird, dass solche Kollisionen vermieden werden.

14. **Umsetz-Roboter** (1) zum schnellen Aufnehmen, Abtransportieren und Ablegen, von ungeordnet dargebotenen Produkten (P), insbesondere nach einem der vorhergehenden Ansprüche, mit
- einem Roboter-Arm,
- einem Greifkopf (20) am freien Ende des Roboter-Armes, der mehrere Greifer (22), insbesondere Sauger (22), aufweist,
**dadurch gekennzeichnet, dass**
die Greifer (22), insbesondere Sauger (22), in ihrer Relativposition zueinander, insbesondere relativ zum Greifkopf (20), insbesondere während des Betriebs des Umsetz-Roboters (1), gesteuert verstellbar sind.

15. Roboter nach Anspruch 14,
**dadurch gekennzeichnet, dass**
- alle Sauger (22) in der Aufsicht betrachtet mit ihren Mitten, insbesondere ihren Drehachsen (22'), auf einer Linie (23) liegen und nur in der durch diese Linie definierten Verstell-Richtung (23') verstellbar sind,
- insbesondere der Roboter (1) so ausgebildet ist, dass der Sauger-Abstand (AB) aller Sauger (22) in Verstell-Richtung (23') nur synchron verstellt werden kann,
und/oder
- insbesondere der Roboter (1) so ausgebildet ist, dass die Sauger-Abstände (SA) benachbarter Sauger (22) des Greifkopfes (20) zueinander immer alle gleich groß sind.

16. Roboter nach einem der vorhergehenden Vorrichtungs-Ansprüche,
**dadurch gekennzeichnet, dass**
der Greifkopf (20) zwei, insbesondere nur zwei, Sauger (22) umfasst, die in der Aufsicht betrachtet in ihrem Sauger-Abstand (SA) zueinander und/oder in ihrem Abstand zu einem Referenzpunkt (9) das Greifkopfes (20) gesteuert verstellbar sind,
und/oder
wenigstens einer der beiden Sauger (22)
- entweder entlang des Greifkopfes (20) linear relativ zum anderen Sauger (22) verfahrbar ist,
- oder um eine quer zur Abstands-Strecke zwischen den beiden Saugern (22) verlaufende, aufrechte Schwenkachse verschwenkbar ist.

17. Roboter nach einem der vorhergehenden Vorrichtungs-Ansprüche,
**dadurch gekennzeichnet, dass**
- die Sauger (22) um ihre Hochachsen, die Sauger-Achsen (22'), gesteuert verdrehbar am Greifkopf (20) angeordnet sind und
- entweder einzeln und unabhängig voneinander oder nur synchron miteinander gesteuert verdrehbar sind.
